# EUROPÄISCHE PATENTSCHRIFT

(11) **EP 1 456 543 B1**
(45) Veröffentlichungstag und Bekanntmachung des Hinweises auf die Patenterteilung: **17.05.2006**
(21) Anmeldenummer: 02779531.9
(22) Anmeldetag: 06.11.2002
(51) Int. Cl.: F16B 11/00, B29C 65/48, B29C 65/40

(54) **HALTE- ODER BEFESTIGUNGSELEMENT MIT EINER KLEBEFLÄCHE ZUM AUFKLEBEN AUF EINE TRÄGERFLÄCHE**
RETAINING OR FIXING ELEMENT WITH AN ADHESIVE SURFACE FOR STICKING TO A SUPPORT SURFACE
ELEMENT DE MAINTIEN OU DE FIXATION PRESENTANT UNE SURFACE ADHESIVE DESTINEE AU COLLAGE SUR UNE SURFACE SUPPORT

(30) Priorität: 30.11.2001 DE 20119422 U
(43) Veröffentlichungstag der Anmeldung: 15.09.2004
(73) Patentinhaber: A. Raymond & Cie, 38028 Grenoble (FR)
(72) Erfinder: HÄNSEL, Mathias, 79595 Rümmingen (DE)
(74) Vertreter: Rüttgers, Joachim
(86) Internationale Anmeldenummer: PCT/EP2002/012354
(87) Internationale Veröffentlichungsnummer: WO 2003/046394

(56) Entgegenhaltungen:
- DE-A- 3 700 981
- FR-A- 2 713 540

## Beschreibung

Die Erfindung bezieht sich auf ein Halte- oder Befestigungselement mit einer Klebefläche zum Aufkleben auf eine Trägerfläche gemäß dem Oberbegriff des Patentanspuchs 1, wobei die Klebefläche mit einem aufschmelzbaren, reaktivierbaren Klebstoff beschichtet ist. Die Klebstoffschicht ist hierbei üblicherweise so bemessen, daß diese beim Aufschmelzen und Andrücken der Klebefläche auf die Trägerfläche mindestens die gesamte nutzbare Klebefläche ausfüllt. Damit soll sichergestellt werden, daß das Halte- oder Befestigungselement stets mit einer definierten, gleichbleibenden Haltekraft auf der Trägerfläche befestigt wird. Dabei kommt es jedoch häufig vor, daß der überschüssige Klebstoff am Rand der Klebefläche hervorquillt, was der Klebeverbindung ein unschönes Aussehen verleiht.

Ein derartiges Halte- oder Befestigungselement ist bei dem Verfahren gemäß DE 37 00 981 A beschrieben, wobei dort die zur Reaktivierung notwendige Wärme in Form von Friktionswärme beim Schweißen in den Klebstoff eingebracht wird. Damit ist eine homogene Verteilung des Klebstoffs nicht zu erreichen.

Aufgabe der Erfindung ist es, eine möglichst homogene optisch ansprechende Verteilung des Klebstoffs beim Reaktivieren zum Verkleben des Halte- oder Befestigungselements auf einer relativ großen Trägerfläche zu erreichen. Dies wird bei einem Halte- oder Befestigungselement gemäß der vorliegenden Erfindung mit den kennzeichnenden Merkmalen des Patentanspruchs 1 gelöst.

Hierbei ist es nach einem weiteren Merkmal der Erfindung vorteilhaft, wenn die Expansionsnut im Querschnitt halbkreisförmig ausgebildet ist und dabei in möglichst geringem Abstand zum Rand verläuft. Um sich nach dem Klebevorgang vergewissern zu können, daß der Klebstoff auch wirklich die gesamte Klebefläche bedeckt, ist es außerdem zweckmäßig, wenn die Expansionsnut zum Rand hin zumindest teilweise offen ist.

Die Erfindung soll nachfolgend anhand der in der Zeichnung dargestellten Ausführungsbeispiele näher erläutert werden. Es zeigt:
- Fig. 1: Den Umriß eines Befestigungselementes mit auf der Klebefläche aufgebrachtem Klebstoff
- Fig. 2: Das gleiche Befestigungselement nach dem Aufdrücken auf eine Klebefläche,
- Fig. 3: Das gleiche Befestigungselement im Schnitt mit Expansionsnut und aufgebrachtem Klebstoff wie bei Fig. 1,
- Fig. 4: Das gleiche Befestigungselement wie bei Fig. 3 nach dem Aufdrücken auf die Klebefläche,
- Fig. 5: Das gleiche Befestigungselement im Schnitt wie bei Fig. 3, jedoch mit einer anderen Ausführungsform der Expansionsnut,
- Fig. 6: Das gleiche Befestigungselement wie bei Fig. 5 nach dem Aufdrücken auf die Klebefläche,
- Fig. 7: Ein anderes Befestigungselement im Schnitt,
- Fig. 8: Das gleiche Befestigungselement in Draufsicht und
- Fig. 9: Einen vergrößerten Ausschnitt der Expansionsnut.

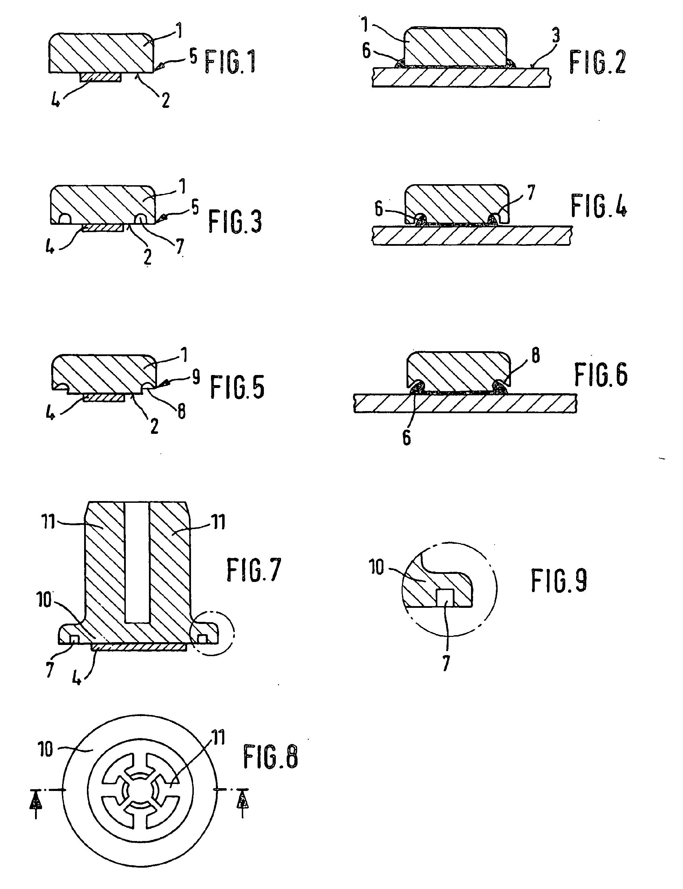

Die in den Figuren rein chematisch dargestellten Befestigungselemente 1 sind an ihrer Unterseite mit einer Klebefläche 2 versehen, mit welchem das Befestigungselement 1 auf einer Trägerfläche 3 aufgeklebt werden soll. Die Klebefläche 2 ist hierbei, wie aus den Figuren 1, 3 und 5 ersichtlich, zu diesem Zweck mit einem aufschmelzbaren Klebstoff 4 beschichtet, welcher auf die Klebefläche 2 trocken aufgetragen ist und durch Zuführung von Schmelzwärme wieder reaktiviert werden und nach dem anschließenden Aushärten seine volle Klebekraft entfalten kann.

Figur 2 zeigt das Befestigungselement 1 nach dem Aufschmelzen des Klebstoffs 4 und Aufdrücken der Klebefläche 2 auf die Trägerfläche 3, wobei der überschüssige Klebstoff am Rand 5 der Klebefläche 2 hervorgequollen ist und dort einen von außen sichtbaren Wulst 6 gebildet hat.

Um diesen Wulst unsichtbar zu machen, ist bei dem Ausführungsbeispiel nach Figur 3 und 4 die Klebefläche 2 entlang den Randes 5 mit einer Expansionsnut 7 versehen. Diese ist im Querschnitt halbkreisförmig ausgebildet und so dimensioniert, daß der beim Aufschmelzen des Klebstoffs 4 und Andrücken der Klebefläche 2 seitlich wegfließende Wulst 6 von dieser Nut 7 aufgenommen wird und auf diese Weise den Blicken des Betrachters entzogen wird. Hierdurch wird ferner sichergestellt, daß die Klebefläche 2 immer voll mit Klebstoff 4 bestrichen ist und damit eine definierte Haltekraft besitzt.

Bei dem Ausführungsbeispiel nach Figur 5 und 6 ist die Expansionsnut 8 zum Rand 5 hin im unteren Randbereich 9 nach außen offen ausgebildet, so daß man sich mit einem Kontrollblick vergewissern kann, daß der Klebstoff auch wirklich die gesamte Klebefläche 2 bedeckt.

In den Figuren 7 und 8 ist ein Anwendungsbeispiel eines Befestigungselementes gezeigt, welches an seiner Unterseite eine Klebeplatte. 10 mit einer erfindungsgemäß ausgebildeten Expansionsnut 7 aufweist, die in Fig. 9 in einem vergrößerten Ausschnitt dargestellt ist. Der obere Teil des Befestigungselements 1 ist mit vier viertelkreisförmig angeordneten Klemmelementen 11 versehen, welche beispielsweise auf einen nicht dargestellten Gewindebolzen aufgedrückt und in bekannter Weise an diesem befestigt werden können.

## Patentansprüche

1. Halte- oder Befestigungselement mit einer Klebefläche zum Aufkleben auf eine Trägerfläche mit einem aufschmelzbaren, reaktivierbaren Klebstoff (4), wobei die Klebefläche (2) entlang des Randes (5) eine Expansionsnut (7, 8) zur Aufnahme des beim Aufschmelzen des Klebstoffs (4) und Andrücken der Klebefläche (2) seitlich wegfließenden Klebstoffwulstes (6) aufweist, **dadurch gekennzeichnet, dass** der Klebstoff (4) im reaktivierbaren Zustand auf der Klebefläche (2) angeordnet und von der Expansionsnut (7, 8) umgeben ist.

2. Halte- oder Befestigungselement nach Anspruch 1, **dadurch gekennzeichnet, daß** die Expansionsnut (7) im Querschnitt halbkreisförmig ausgebildet ist und in geringem Abstand zum Rand (5) verläuft

3. Halte- oder Befestigungselement nach Anspruch 1, **dadurch gekennzeichnet, daß** die Expansionsnut (8) zum Rand (9) hin zumindest teilweise offen ist.

## Claims

1. Retaining or fixing element with an adhesive surface for sticking to a support surface having a reactivatable adhesive (4) which can be melted, the adhesive surface (2) having, along the edge (5), an expansion groove (7,8) for receiving the adhesive bead (6) flowing away laterally during melting of the adhesive (4) and pressing on of the adhesive surface (2), **characterized in that** the adhesive (4) in the reactivatable state is arranged on the adhesive surface (2) and is surrounded by the expansion groove (7,8).

2. Retaining or fixing element according to Claim 1, **characterized in that** the expansion groove (7) is semicircular in cross-section and is a short distance from the edge (5).

3. Retaining or fixing element according to Claim 1, **characterized in that** the expansion groove (8) is at least partly open towards the edge (9).

## Revendications

1. Organe de retenue ou de fixation muni d'une face adhésive destiné à être collé sur une surface formant support au moyen d'une substance adhésive (4) susceptible d'être réactivée par fusion, la face adhésive (2) comportant en l'occurrence, le long de son pourtour (5) une rainure d'expansion (7, 8) destinée à absorber le bourrelet de substance adhésive (6) qui se forme par l'écoulement vers les côtés de la substance adhésive (4) lors de sa fusion et sous l'effet de l'application par pression de la face adhésive (2), **caractérisé en ce que** la substance adhésive (4) est disposée sur la face adhésive (2) à l'état de réactivation ultérieure possible et qu'elle est entourée par la rainure d'expansion (7, 8).

2. Organe de retenue ou de fixation selon la revendication 1, **caractérisé en ce que** la rainure d'expansion (7) présente une section transversale en forme d'arc de cercle et qu'elle est disposée à une très faible distance du pourtour (5).

3. Organe de retenue ou de fixation selon la revendication 1, **caractérisé en ce que** la rainure d'expansion (8) est au moins partiellement ouverte en direction du bord (9).
